# FASCICULE DE BREVET EUROPEEN

(11) **EP 2 379 397 B1**
(45) Date de publication et mention de la délivrance du brevet: **12.03.2014**
(21) Numéro de dépôt: 09796691.5
(22) Date de dépôt: 15.12.2009
(51) Int. Cl.: B62D 15/02

(54) **DISPOSITIF DE COMMANDE D'UN CAPTEUR DE POSITION D'UN VOLANT DE DIRECTION D'UN VEHICULE AUTOMOBILE**
KONTROLLVORRICHTUNG EINES LENKRADWINKELSENSORS EINES KRAFTFAHRZEUGS
CONTROL SYSTEM FOR A STEERING WHEEL POSITION SENSOR OF A VEHICLE

(30) Priorité: 18.12.2008 FR 0807128
(43) Date de publication de la demande: 26.10.2011
(73) Titulaire: Valeo Systèmes de Contrôle Moteur, 95892 Cergy Pontoise (FR)
(72) Inventeur: PLAIDEAU, Michel, F-95590 Presles (FR); BETTAN, Philippe, F-95120 Ermont (FR)
(86) Numéro de dépôt international: PCT/EP2009/067224
(87) Numéro de publication internationale: WO 2010/069974

(56) Documents cités:
- EP-A- 0 924 491
- WO-A-2007/068765
- DE-A1- 10 145 884
- DE-A1-102005 009 489
- DE-A1-102007 052 099
- US-A1- 2008 048 772

## Description

La présente invention concerne un dispositif pour commander un capteur de position d'un véhicule automobile équipé d'un moteur d'assistance à la direction.

Les véhicules actuels sont de plus en plus souvent équipés de moteur d'assistance à la direction. De tels véhicules comportent un système de direction formé par une colonne de direction portant à son extrémité supérieure un volant de direction susceptible d'être actionné par le conducteur du véhicule, une crémaillère sur laquelle agit l'extrémité inférieure de la colonne de direction et un moteur d'assistance à la direction en liaison mécanique avec la crémaillère. Un système de gestion électronique de type ECU (« Electronic Control Unit ») contrôle le moteur d'assistance à la direction pour éviter que la direction du véhicule devienne trop légère à vitesse usuelle ou trop lourde à vitesse quasi-nulle.

Pour le bon fonctionnement du moteur d'assistance à la direction, il est nécessaire de disposer d'une information reflétant la position angulaire du volant de direction pour assurer la fonction de retour automatique du volant de direction. Cette information est généralement fournie par un capteur volant situé au niveau du volant. La présence d'un capteur volant dédié à cette fonction entraîne toutefois un surcoût important.

La position angulaire du volant de direction d'un véhicule peut également être obtenue grâce à un capteur de position situé au niveau du moteur d'assistance à la direction.

Cependant, l'utilisation de ce type de capteur pose certaines difficultés. En effet, la position du volant doit être connue à chaque instant (i.e. à l'arrêt et en roulage). De ce fait, il est nécessaire de maintenir le capteur de position du moteur d'assistance à la direction sous tension et ce même si le contact du véhicule est coupé. Un tel maintien sous tension entraîne un risque de décharge de la batterie.

DE 10 2007 052 099 divulgue un dispositif de commande selon le préambule de la revendication 1.

Dans ce contexte, l'invention vise à remédier aux problèmes de l'art antérieur précités en proposant un dispositif capable de déterminer, dès lors que le contact du véhicule est coupé, la position angulaire du volant de direction, avec précision et exactitude, tout en assurant une consommation électrique minimum et en évitant un risque de décharge de la batterie du véhicules.

A cette fin, l'invention propose un dispositif de commande d'un capteur de position d'un volant de direction d'un véhicule automobile selon la revendication 1.

Outre les caractéristiques principales qui viennent d'être mentionnées dans le paragraphe précédent, le dispositif selon l'invention peut présenter une ou plusieurs caractéristiques supplémentaires ci-dessous, considérées individuellement ou selon toutes les combinaisons techniques possibles :
- lesdits moyens de génération d'un signal de commande génèrent un signal à une fréquence de veille adaptée pour détecter un demi-tour d'un rotor ;
- ladite fréquence de veille est comprise entre 500 Hz et 1000 Hz ;
- lesdits moyens de génération d'un signal de commande génèrent un signal à une fréquence active strictement supérieure à ladite fréquence de veille dès que le capteur de position détecte un mouvement de rotation dudit volant de direction ;
- Lesdits moyens de génération d'un signal de commande diminuent la fréquence active pour atteindre la fréquence de veille lorsque :
   - le capteur de position détecte une décélération de la vitesse de rotation dudit volant ; ou
   - le capteur ne détecte aucune rotation dudit volant sur une certaine période.

L'invention porte également sur un système de direction assisté pour véhicule automobile selon la revendication 6.

D'autres caractéristiques et avantages de l'invention ressortiront clairement de la description qui en est donnée ci-dessous, à titre indicatif et nullement limitatif, de modes de réalisations faisant références aux figures annexées ci-jointes sur lesquelles :
- La figure 1 est une représentation schématique simplifiée d'un système de direction pour véhicule automobile et d'un dispositif de commande selon l'invention ;
- La figure 2 illustre de façon schématique différents signaux de commande du capteur de position générés par le dispositif de commande.

Pour des raisons de clarté, les mêmes éléments ont été désignés par des références similaires. De même, seuls les éléments utiles à la compréhension de l'invention ont été représentés, et ceci sans respect de l'échelle et de manière schématique.

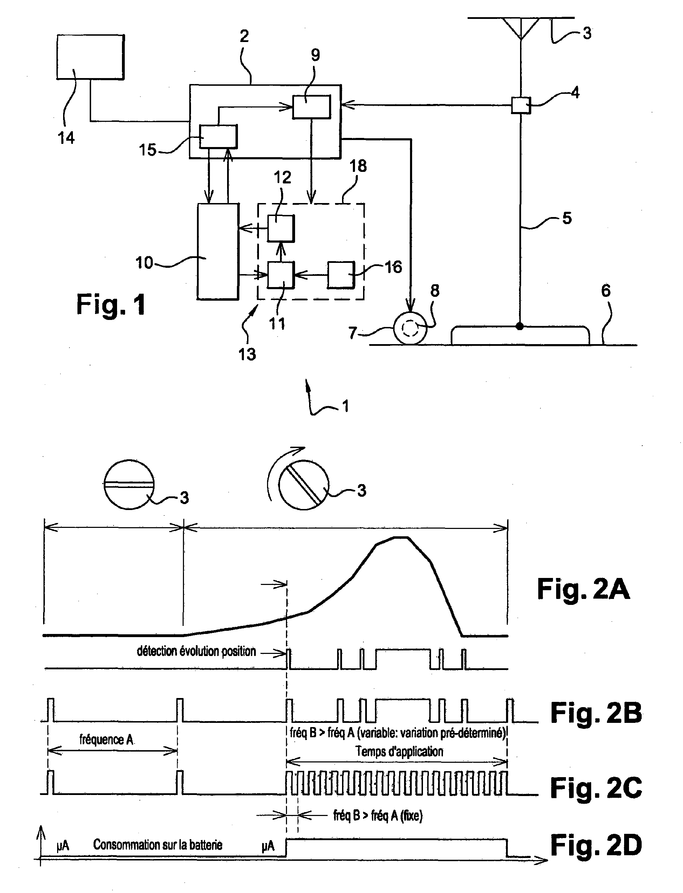

La figure 1 illustre de manière schématique pour faciliter la compréhension de l'invention, un système 1 de direction pour véhicule automobile qui comprend :
- une colonne 5 de direction portant à son extrémité supérieure un volant 3 de direction susceptible d'être entraîné en rotation par le conducteur du véhicule automobile ;
- une crémaillère 6 sur laquelle agit l'extrémité inférieure de la colonne 5 de direction ;
- un moteur 7 d'assistance à la direction en liaison mécanique avec ladite crémaillère 6 ;
- un capteur 4 de couple associé à la colonne 5 de direction permettant de mesurer le couple appliqué par le conducteur sur le volant 3 ;
- un capteur 13 de position ;
- un dispositif 2 de commande permettant de maintenir éveillé le capteur 13 de position.

On entend par capteur 13 de position, un capteur permettant de compter le nombre de demi-tour(s) ou de tour(s) d'un rotor 8 du moteur 7 par l'intermédiaire d'un rapport de réduction opérant au niveau dudit rotor et de la crémaillère 6. Ce type de capteur est utilisé dans les moteurs d'assistance à la direction de l'état de la technique sans pour autant tirer parti de l'information pouvant en découler.

Le dispositif 2 de commande reçoit, entre autre, des informations en provenance du capteur 4 de couple et du capteur 13 de position. Lesdites informations reflètent respectivement le couple exercé par le conducteur sur le volant 3 et la position du rotor 8.

Le dispositif 2 de commande comprend, en outre, des moyens 9 de génération d'un signal de commande et un régulateur 15 pour commander lesdits moyens 9.

Par ailleurs, le dispositif 2 génère un signal de commande permettant d'activer le capteur 13. Le capteur 13 comporte une mémoire 10 de stockage de données et un module 18 de traitement de données.

Le module 18 de traitement des données comporte :
- un détecteur 16 de position apte à détecter une évolution angulaire du rotor 8 ;
- un module 11 de comparaison communiquant avec la mémoire 10 ;
- un module 12 de calcul.

Lors de la mise en marche du véhicule par le conducteur, le capteur 13 est alimenté en énergie de façon continue par une alimentation 14 telle qu'une batterie.

En revanche, dès que le contact du véhicule est coupé, le régulateur 15 régule la fréquence des périodes d'acquisition du capteur 13 de position pour ne pas altérer le fonctionnement de l'alimentation 14 du véhicule en la déchargeant. En effet, une consommation excessive du capteur 13 lorsque le contact est éteint aurait pour action de décharger l'alimentation 14. Afin de respecter l'autonomie de l'alimentation, la consommation électrique du capteur 13 en mode veille est de préférence inférieure ou égale à 200 µA.

Dès que le contact du véhicule est coupé, le régulateur 15 alimente la mémoire 10 et les moyens 9 de génération d'un signal de commande.

Les moyens 9 de génération d'un signal de commande transmettent alors un signal de commande à une fréquence prédéterminée, dite fréquence de veille, au module 18 de traitement des données. De ce fait, la consommation électrique générale du dispositif est diminuée.

La mémoire 10 permet de mémoriser la position du volant détectée antérieurement ; en d'autres termes, dès qu'une modification de la position volant est détectée, l'information est transmise à la mémoire 10 qui mémorise cette information.

Parallèlement, le détecteur 16 de position permet de déterminer à tout instant une évolution de la position volant correspondant à au moins un demi-tour ou un tour du rotor 8.

Du fait du rapport de réduction existant entre la crémaillère 6 et le rotor 8, il est à noter que l'évolution de position dudit rotor 8 reflète avec précision et exactitude l'évolution de la position angulaire du volant 3.

Selon un mode de mise en oeuvre non représenté le rapport de réduction peut être situé au niveau de la colonne 5 de direction.

Ainsi, dès lors que le conducteur tourne le volant 3, le détecteur 16 détecte le nombre de demi-tour(s) ou de tour(s) qu'effectue le rotor 8.

Cette information est transmise simultanément au module 11 de comparaison. Ce dernier reçoit en outre des informations en provenance de la mémoire 10.

Ainsi, le module 11 de comparaison compare la valeur mémorisée avec la valeur détectée puis transmet ces données au module 12 de calcul.

Ce module 12 de calcul, calcule la différence angulaire et/ou du nombre de demi-tour(s) ou de tour(s) du rotor 8 et transmet cette information à la mémoire 10. Cette information devient alors une donnée antérieure.

Une fois traitées par le capteur 13, ces informations sont transmises au dispositif 2 de commande et plus particulièrement au régulateur 15.

Ledit dispositif 2 reçoit également des données en provenance du capteur 4 de mesure de couple appliqué par le conducteur sur le volant 3.

Ainsi, lesdites données, obtenues par le capteur 4 de couple et le capteur 13 de position permettent respectivement de connaître le couple exercé par le conducteur sur le volant 3 et la position angulaire dudit volant 3.

De ce fait, dès lors que le couple exercé par le conducteur dépasse un seuil prédéterminé ou est en deçà dudit seuil, le dispositif 2 de commande agit sur le moteur 7, lequel génère un couple d'assistance par l'intermédiaire du rotor 8 procurant une assistance au braquage des roues directrices du véhicule.

En outre, le capteur 13 communique avec le capteur 15 dès lors que le module 12 de calcul détecte une évolution de position du rotor 8.

Ce régulateur va ainsi commander les moyens 9 de génération d'un signal de commande, lesquels vont à leurs tours générer un signal de commande au module 18 de traitement des données.

A titre d'exemple, la figure 2 illustre deux exemples de signaux de commande du module 18 pour la détection d'évolution de position volant. Ces signaux sont des signaux impulsionnels, une impulsion correspondant à une période d'acquisition pendant laquelle le module 18 est « réveillé » (i.e. effectue une détection).

La courbe 2A est une représentation schématique de l'accélération de rotation du volant 3 engendrée par le conducteur du véhicule. La figure 2C illustre un premier signal de commande des périodes d'acquisition généré par les moyens 9 de génération. L'exemple de la figure 2C n'est pas couvert par les revendications mais utile à la compréhension de l'invention. Ce premier signal possède deux fréquences :
- une fréquence basse A correspondant à la fréquence de veille;
- une fréquence haute B strictement supérieure à la fréquence A, correspondant à une fréquence active.

Dans une telle mise en oeuvre, lorsqu'aucun mouvement du rotor 8 n'a été détecté par le capteur 13, le module 18 reçoit un signal à basse fréquence A. Cette fréquence de veille A est adaptée pour réveiller le capteur 13 de façon à ne pas manquer un demi-tour ou tour du rotor 8 lorsque le rotor 8 passe d'une immobilité à une phase d'accélération de rotation. En vue de minimiser la consommation du capteur 13 lorsqu'il n'a détecté aucun mouvement sur une certaine période, la fréquence de veille A est la plus faible possible.

Dès qu'un mouvement de rotation du volant 3 est détecté, les moyens 9 transmettent un signal de commande au module 18 à une fréquence active B strictement supérieure à la fréquence de veille A et adaptée pour ne pas manquer de demi-tour(s) ou de tour(s) lorsque la vitesse de rotation du volant 3 est maximale

Cette particularité, confère au capteur 13 une caractéristique de consommation optimale. En effet, lorsqu'aucun mouvement n'est détecté, la consommation du capteur 13 de position est faible et de préférence inférieure ou égale à 20a µA. Ainsi, l'alimentation 14 est très faiblement sollicitée.

Puis, pour ne pas « rater » un demi-tour du rotor 8, on augmente la fréquence pour passer à une fréquence active B permettant de maintenir éveillé le module 18 plus souvent.

En effet, un manque de précision angulaire serait handicapant notamment pour la fonction de retour volant offert par les dispositifs actuels d'assistance à la direction.

La figure 2B illustre l'invention, consistant à faire varier la fréquence de commande de façon sensiblement proportionnelle à l'accélération ou la décélération de la vitesse de rotation du volant 3. Pour des raisons de précision il est préférable que cette fréquence ne soit pas en deçà de 1000 Hz.

Comme illustré figure 2D, lorsqu'aucune rotation n'est détectée, la consommation sur batterie est faible. Dès qu'une évolution de position du rotor est détectée par le capteur 13 de position, les moyens 9 génèrent un signal de commande vers le module 18 à une fréquence active strictement supérieure à la fréquence de veille ayant pour effet d'augmenter la consommation sur batterie. Cette consommation est ensuite diminuée :
- lorsque le capteur 13 de position détecte une décélération ;
- à la fin d'une décélération ; ou
- lorsque ledit capteur ne détecte aucune rotation sur une certaine période.

On notera que le domaine d'application privilégié de l'invention est celui des véhicules. Le procédé selon l'invention peut s'appliquer à tout type de véhicule équipé d'un système d'assistance à la direction nécessitant une faible consommation en vue d'assurer une durée de vie de l'alimentation optimale. De ce fait, l'invention est applicable aux autobus, voitures, camions ou tout autre type de véhicule.

## Revendications

1. Dispositif (2) de commande d'un capteur (13) de position d'un volant (3) de direction d'un véhicule automobile, ledit dispositif (2) comportant des moyens (9) de génération d'un signal de commande des périodes d'acquisition du capteur (13) de position lorsque le véhicule est à l'arrêt, la fréquence dudit signal augmentant lors de la détection d'une évolution de la position dudit volant (3), **caractérisé en ce que** lesdits moyens (9) génèrent un signal à une fréquence évoluant de façon proportionnelle avec une accélération ou une décélération de la vitesse de rotation dudit volant (3) de direction.

2. Dispositif (2) selon la revendication précédente, **caractérisé en ce que** lesdits moyens (9) génèrent un signal à une fréquence de veille adaptée pour détecter un demi-tour d'un rotor (8).

3. Dispositif (2) selon la revendication précédente **caractérisé en ce que** ladite fréquence de veille est comprise entre 500 Hz et 1000 Hz.

4. Dispositif (2) selon la revendication 1 **caractérisé en ce que** lesdits moyens (9) génèrent un signal à une fréquence active strictement supérieure à ladite fréquence de veille dès que ledit capteur (13) de position détecte un mouvement de rotation dudit volant (3) de direction.

5. Dispositif (2) selon l'une au moins des revendications 1 à 4 **caractérisé en ce que** lesdits moyens (9) diminuent ladite fréquence active pour atteindre ladite fréquence de veille lorsque :
- ledit capteur (13) de position détecte une décélération de la vitesse de rotation dudit volant (3); ou
- ledit capteur (13) ne détecte aucune rotation dudit volant (3) sur une certaine période.

6. Système (1) de direction assisté pour véhicule automobile **caractérisé en ce qu'**il comporte au moins :
- une colonne (5) de direction portant à son extrémité supérieure un volant (3) de direction ;
- une crémaillère (6) sur laquelle agit l'extrémité inférieure de ladite colonne (5) de direction ;
- un moteur (7) d'assistance à la direction en liaison mécanique avec ladite crémaillère (6) ;
- un capteur (4) de couple associé à la colonne (5) de direction permettant de mesurer le couple appliqué par le conducteur sur ledit volant (3);
- un capteur (13) de position du volant (3) de direction;
ledit système (1) est **caractérisé en ce qu'**il comprend en outre un dispositif (2) de commande selon l'une des revendications 1 à 5 permettant de maintenir éveillé ledit capteur (13) de position pour dénombrer le nombre de demi-tour(s) ou de tour(s) d'un rotor (8) dudit moteur (7) par l'intermédiaire d'un rapport de réduction opérant au niveau dudit rotor (8) et :
- de ladite crémaillère (6) ; ou
- de ladite colonne (5) de direction.

## Patentansprüche

1. Steuervorrichtung (2) eines Positionssensors (13) einer Lenkrads (3) eines Kraftfahrzeugs, wobei die Vorrichtung (2) Einrichtungen {9} zur Erzeugung eines Steuersignals der Erfassungsperioden des Positionssensors (13) aufweist, wenn das Fahrzeug steht, wobei die Frequenz des Signals bei der Erfassung einer Änderung der Position des Lenkrads (3) ansteigt, **dadurch gekennzeichnet, dass** die Einrichtungen (9) ein Signal mit einer Frequenz erzeugen, die sich proportional mit einer Beschleunigung oder einer Verlangsamung der Drehgeschwindigkeit des Lenkrads (3) ändert.

2. Vorrichtung (2) nach dem vorhergehenden Anspruch, **dadurch gekennzeichnet, dass** die Einrichtungen (9) ein Signal mit einer Standby-Frequenz erzeugen, die geeignet ist, um eine Halbdrehung eines Rotors (8) zu erfassen.

3. Vorrichtung (2) nach dem vorhergehenden Anspruch, **dadurch gekennzeichnet, dass** die Standby-Frequenz zwischen 500 Hz und 1000 Hz liegt.

4. Vorrichtung (2) nach Anspruch 1, **dadurch gekennzeichnet, dass** die Einrichtungen (9) ein Signal mit einer aktiven Frequenz strikt höher als die Standby-Frequenz erzeugen, sobald der Positionssensor (13) eine Drehbewegung des Lenkrads (3) erfasst.

5. Vorrichtung (2) nach mindestens einem der Ansprüche 1 bis 4, **dadurch gekennzeichnet, dass** die Einrichtungen (9) die aktive Frequenz verringern, um die Standby-Frequenz zu erreichen, wenn:
- der Positionssensor (13) eine Verlangsamung der Drehgeschwindigkeit des Lenkrads (3) erfasst; oder
- der Sensor (13) über einen bestimmten Zeitraum keine Drehung des Lenkrads (3) erfasst.

6. Servolenkungssystem (1) für ein Kraftfahrzeug, **dadurch gekennzeichnet, dass** es mindestens aufweist:
- eine Lenkstange (5), die an ihrem oberen Ende ein Lenkrad (3) trägt;
- eine Zahnstange · (6), auf die das untere Ende der Lenkstange (5) einwirkt;
- einen Servolenkungsmotor (7) in mechanischer Verbindung mit der Zahnstange (6);
- einen der Lenkstange (5) zugeordneten Drehmomentsensor (4), der es ermöglicht, das vom Fahrer auf das Lenkrad (3) ausgeübte Drehmoment zu messen;
- einen Positionssensor (13) des Lenkrads (3); wobei das System (1) **dadurch gekennzeichnet ist, dass** es außerdem eine Steuervorrichtung (2) nach einem der Ansprüche 1 bis 5 enthält, die es ermöglicht, den Positionssensor (13) aktiv zu halten, um die Anzahl von Halbdrehungen oder Drehungen eines Rotors (8) des Motors (7) mittels eines Untersetzungsverhältnisses zu zählen, das im Bereich des Rotors (8) und:
- der Zahnstange (6); oder
- der Lenkstange (5) wirkt.

## Claims

1. Device (2) for controlling a sensor (13) of the position of a steering wheel (3) of a motor vehicle, said device (2) comprising means (9) for generating a control signal for the acquisition periods of the position sensor (13) when the vehicle is stationary, the frequency of said signal increasing when a change in the position of said steering wheel (3) is detected, **characterized in that** said means (9) generate a signal at a frequency changing proportionally with an acceleration or a deceleration of the rotation speed of said steering wheel (3).

2. Device (2) according to the preceding claim, **characterized in that** said means (9) generate a signal at a standby frequency suitable for detecting a half-turn of a rotor (8).

3. Device (2) according to the preceding claim, **characterized in that** said standby frequency is between 500 Hz and 1000 Hz.

4. Device (2) according to Claim 1, **characterized in that** said means (9) generate a signal at an active frequency that is strictly higher than said standby frequency when said position sensor (13) detects a rotary movement of said steering wheel (3).

5. Device (2) according to at least one of Claims 1 to 4, **characterized in that** said means (9) reduce said active frequency to reach said standby frequency when:
- said position sensor (13) detects a deceleration of the rotation speed of said steering wheel (3); or
- said sensor (13) detects no rotation of said steering wheel (3) over a certain period.

6. Assisted steering system (1) for a motor vehicle, **characterized in that** it comprises at least:
- a steering column (5) supporting at its top end a steering wheel (3);
- a rack (6) on which the bottom end of said steering column (5) acts;
- a power-steering motor (7) mechanically connected to said rack (6);
- a torque sensor (4) associated with the steering column (5) making it possible to measure the torque applied by the driver to said steering wheel (3);
- a sensor (13) of the position of the steering wheel (3);
said system (1) is **characterized in that** it also comprises a control device (2) according to one of Claims 1 to 5 making it possible to keep said position sensor (13) alert for counting the number of half-turns or turns of a rotor (8) of said motor (7) by means of a reduction ratio operating on said rotor (8) and:
- on said rack (6); or
- on said steering column (5).
